# EUROPEAN PATENT SPECIFICATION

(11) **EP 3 214 220 B1**
(45) Date of publication and mention of the grant of the patent: **13.03.2019**
(21) Application number: 15854652.3
(22) Date of filing: 28.10.2015
(51) Int. Cl.: D06M 11/45, C08J 5/06, D06M 11/50, D06M 15/333, D06M 101/40

(54) **PROCESS FOR PRODUCING CARBON-FIBER RESIN TAPE, AND CARBON-FIBER RESIN TAPE**
VERFAHREN ZUR HERSTELLUNG VON KOHLEFASERHARZBAND SOWIE KOHLEFASERHARZBAND
PROCÉDÉ DE FABRICATION D'UNE BANDE DE RÉSINE CONTENANT DES FIBRES DE CARBONE ET BANDE DE RÉSINE CONTENANT DES FIBRES DE CARBONE

(30) Priority: 31.10.2014 JP 2014223825
(43) Date of publication of application: 06.09.2017
(73) Proprietor: Japan Matex Co., Ltd., Sennan-shi, Osaka 590-0535 (JP)
(72) Inventor: TSUKAMOTO Katsuro, Sennan-shi Osaka 590-0535 (JP); TSUKAMOTO Hiroaki, Sennan-shi Osaka 590-0535 (JP)
(74) Representative: Manuel Illescas y Asociados, S.L.U.
(86) International application number: PCT/JP2015/080450
(87) International publication number: WO 2016/068210

(56) References cited:
- JP-A- H03 287 860
- JP-A- 2007 270 360
- JP-A- 2014 525 997
- JP-B2- H0 791 780

## Description

### FILED OF INVENTION

The present invention relates to a method of manufacturing a carbon fiber resin tape and the carbon fiber resin tape, more particular, to a method of manufacturing a belt-like carbon fiber resin tape capable of being adhered with a high adhesive strength without being pressurized at high pressure nor heated at high temperature, and the carbon fiber resin tape.

### BACKGROUND

A carbon fiber resin tape prepared by combining several carbon fibers and resins has the strength and the modulus of elasticity equal to those of a metallic material, while it has lower specific gravity than the metallic material, allowing for weight reduction of component members. Due to its rusting resistance, the tape has been increasingly utilized for airplanes and automobiles designed to reduce fuel consumption.

With the carbon fiber resin tape, a three-dimensional shape is formed as follows. Several pieces of the carbon fiber resin tapes are laminated and then the laminate is heated and pressurized to cure a resin impregnated in the carbon fiber to become three-dimensional. At this process, the laminate can be heated and pressurized in a three dimensional shaped mold to become a desired three-dimensional shape. (See Japanese Unexamined Patent Application Publication No. 2014-098127).

However, the laminate of the carbon fiber resin tape needs a metal mold for the heating and the pressurization, and must be heated at more than 300 °C, which leads to higher costs.

Japanese Unexamined Patent Application Publication No. 2007-270360 on the other hand discloses a multifilament consisting of carbon fibers which is immersed into a liquid containing an adhesive agent. When the adhesive agent is dried and solidified a flat carbon fiber bundle is obtained.

### Prior Art Documents

### Patent documents

Patent document 1. Japanese Unexamined Patent Application Publication No. 2014-098127
Patent document 2. Japanese Unexamined Patent Application Publication No. 2007-270360

### SUMMARY OF THE INVENTION

### Problems to be solved by the Invention

The present invention aims to solve the above-described problems of the Prior Art and provides a method of manufacturing a carbon fiber resin tape capable of being adhered with a high adhesive strength without being pressurized at high pressure nor heated at high temperature.

### MEANS FOR SOLVING THE PROBLEMS

The present invention relates to a method of manufacturing a carbon fiber resin tape, the method comprising: a first step of immersing a carbon fiber bundle having several carbon fibers in reduced water having a negative oxidation-reduction potential to flatten the carbon fiber bundle; a second step of immersing the above-described carbon fiber bundle in an adhesive solution containing an adhesive, alumina sol, and potassium persulfate after the above-described first step; and a third step of drying the above-described carbon fiber bundle after the above-described second step.

The carbon fiber resin tape can be of any width and includes any sheet-shaped tapes.

Described herein is the method of manufacturing a carbon fiber resin tape, wherein the oxidation-reduction potential of the above-described reduced water is equal to or less than - 800mV.

Described herein is the method of manufacturing a carbon fiber resin tape, wherein the above-described adhesive in the above-described adhesive solution is polyvinyl alcohol, and wherein concentration of the polyvinyl alcohol is 0.5-30wt%, concentration of the alumina sol is 0.5-16.7wt%, and concentration of the potassium persulfate is 0.5-10wt%.

The present invention also relates to a carbon fiber resin tape where several carbon fiber bundles are flattened, wherein the tape contains a dry adhesive including alumina sol and potassium persulfate, on the surface and in the gap between the carbon fibers.

### Effects of the Invention

According to the method of manufacturing the carbon fiber resin tape of the present invention, presence of the dry adhesive, alumina sol, and potassium persulfate on the surface and in the gap of the carbon fiber increases the adhesive strength of the carbon fiber resin tape when using a different adhesive. Additionally, when several carbon fiber resin tapes are laminated with the use of the adhesive to become three dimensional, no higher pressurization is necessary, and even if the tape is heated, 100 °C or less of heating temperature is sufficient to increase the adhesive strength.

According to the method of manufacturing the carbon fiber resin tape of the present invention, the oxidation-reduction potential of reduced water is -800mV or less, leading to easy flattening of the above-described carbon fiber bundle in the first step.

According to the method of manufacturing the carbon fiber resin tape of the present invention, the amounts of adhesive, alumina sol, and potassium persulfate are appropriate, leading to further increase in the adhesive strength of the carbon fiber resin tape including the adhesive.

According to the tape of the present invention, the adhesive strength of the carbon fiber resin tape when using a different adhesive can be increased due to the dry adhesive, alumina sol, and potassium persulfate on the surface and in the gap of the carbon fiber.

### BRIEF DESCRIPTION OF DRAWINGS

**Figure 1** shows a schematic view of an apparatus for manufacturing the carbon fiber resin tape used for a method of manufacturing the carbon fiber resin tape of the present invention.
**Figure 2** shows an example of a configuration for assisting an opening action.
**Figure 3** schematically shows transition of the forms of the carbon fiber bundle in the manufacturing method of the present invention.
**Figure 4** shows a chart of peel strength in the examples of the manufacturing method of the present invention.

### DESCRIPTION OF EMBODIMENTS

Hereinafter, preferable embodiments of a method of manufacturing a carbon fiber resin tape of the present invention will be set forth with reference to the following drawings.

A method of manufacturing a carbon fiber resin tape according to the present embodiment comprises a first step of immersing a carbon fiber bundle consisting of several carbon fibers in reduced water having a negative oxidation-reduction potential to flatten the carbon fiber bundle; a second step of immersing the above-described carbon fiber bundle in an adhesive solution containing an adhesive, alumina sol, and potassium persulfate after the above-described first step; and a third step of drying the above-described carbon fiber bundle after the above-described second step.

The carbon fiber bundle consisting of several carbon fibers which was dried in the third step is referred herein to as a carbon fiber resin tape.

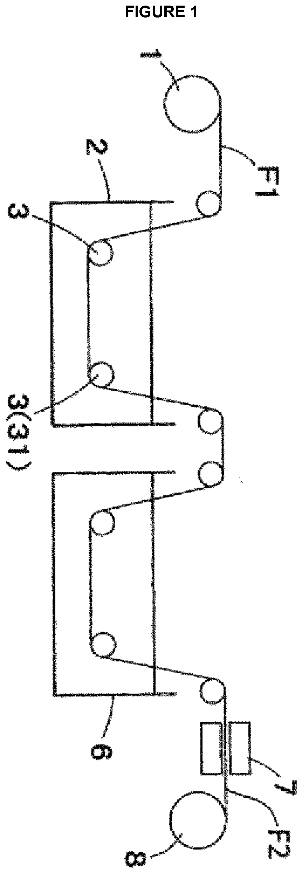

Fig.1 shows an apparatus for manufacturing a carbon fiber resin tape for use in a method of manufacturing the carbon fiber resin tape of the present invention. The apparatus for manufacturing the carbon fiber resin tape comprises a yarn feeding roller 1 feeding a carbon fiber bundle F1 and a winding roller 8 winding the formed carbon fiber resin tape F2.

The apparatus for manufacturing the carbon fiber resin tape further comprises a first tank 2 and a second tank 6 for immersing the carbon fiber bundle F1 between the yarn feeding roller 1 and the winding roller 8, and an apparatus for drying the carbon fiber bundle F1 between the second tank 6 and the winding roller 8. The apparatus for manufacturing the carbon fiber resin tape also comprises a roller for delivering the carbon fiber bundle F1 between the yarn feeding roller 1 and the winding roller 8, as appropriate.

The first tank 2 stores reduced water having a negative oxidation-reduction potential. The second tank 6 stores an adhesive solution containing an adhesive, alumina sol, and potassium persulfate.

Hereinafter, each step of a method of manufacturing a carbon fiber resin tape F2 of the present embodiment will be set forth.

### First Step

As shown in Fig. 1, the carbon fiber bundle F1 is continuously fed from the yarn feeding roller 1 and then immersed in water stored in the first tank 2 for a predetermined period.

The carbon fiber bundle F1 includes 3K (three-thousand bundles), 6K (six-thousand bundles), 12K (twelve-thousand bundles) or the like of the non-twisted carbon fiber. Both Acrylic- and pitch-based carbon fibers are also applicable.

The water stored in the first tank 2 herein is reduced water having a negative oxidation-reduction potential.

While general water has a positive oxidation-reduction potential (in the case of tap water: approximately +400-+600 mV), reduced water has a negative oxidation-reduction potential, small water molecule cluster, and thus excellent permeability.

The carbon fiber bundle F1 is immersed in such reduced water to naturally expand without the need of physical external force such as ultrasound or the like.

Reduced water used in the present invention has preferably -800mV or less of oxidation-reduction potential.

Using such reduced water having a low oxidation-reduction potential allows the carbon fiber constituting the carbon fiber bundle F1 to surely flatten in a short period of time and become a belt-like flat fiber bundle. The obtained belt-like flat fiber bundle is not likely to return to its original fiber.

A method for manufacturing reduced water used in the present invention includes, but not limited to, for example following methods:

### 1. Gas Bubbling Method

Bubbling nitrogen gas, argon gas, or hydrogen gas reduces an oxygen concentration in water and lowers an oxidation-reduction potential.

### 2. Method by Addition of Hydrazine

Addition of hydrazine reduces an oxygen concentration in water and lowers an oxidation-reduction potential.

### 3. Electrolysis Method

(a) Water is electrolyzed by application of high frequency voltage having asymmetrical positive and negative peak values and/or duty ratios to lower an oxidation-reduction potential.
(b) Using an electrode comprising one ground electrode (cathode) and two specially shaped electrodes (rhombic mesh-like electrode or hexagonal mesh-like electrode) made of Pt and Ti with the anode and cathode alternately changed, water is electrolyzed by application of high frequency voltage, to lower an oxidation-reduction potential.

In the present invention, it is preferable to use reduced water obtained by the method "3 (b)" among the above-described methods.

The reason is that the method "3 (b)" more easily and surely gives reduced water which have a low oxidation-reduction potential (-800 mV or less) and maintain the negative oxidation-reduction potential for a long period of time, compared with the other methods.

A device for implementing a method in "3 (b)" is disclosed in Japanese Unexamined Patent Application No. 2000-239456 by the applicant and able to be implemented based on this disclosure.

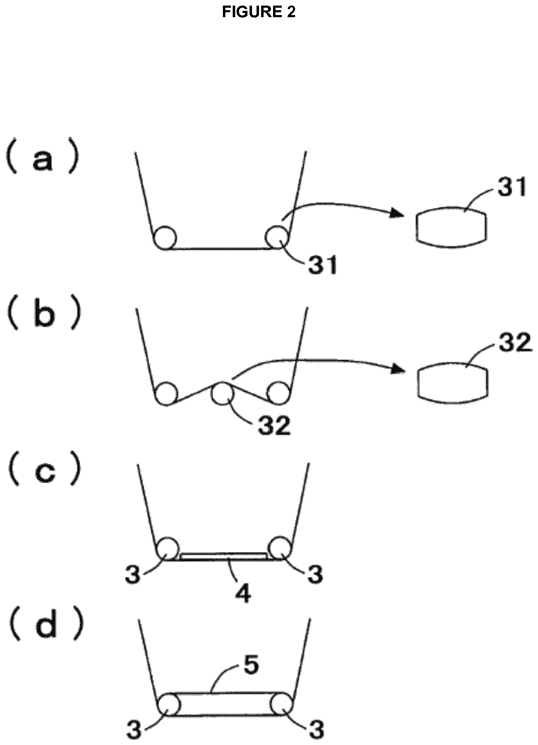

In the present invention, the carbon fiber bundle F1 can be naturally spread (opened) without any action of physical external force by being immersed into reduced water as described above. Also, a configuration as shown in Fig. 2 may be adopted to help this opening action.

Fig. 2 (a) shows a configuration where the second roller 31 of two conveyance rollers 3 which support and convey the carbon fiber bundle F1 in the first tank 2 has an opening action.

Specifically, the cross-sectional (cross section along a rotation axis) shape of the second roller 31 is made into an expanded shape from the both sides toward the center as shown by the arrow in Fig. 2 (a), allowing a fiber to be easily spread along the surface of the second roller 31.

Fig. 2 (b) shows a configuration where three or more conveyance rollers 3 (three conveyance rollers in Fig. 2 (b)) are provided in the first tank 2 so as to convey the carbon fiber bundle F1 while bending it, allowing the second and the following rollers (the second roller 32 in Fig. 2 (b)) to have an opening action.

Specifically, the second roller 32 is made into the similar cross-sectional shape as that in Fig. 2 (a), allowing a fiber to be easily spread along the surface of the second roller 32.

Fig. 2 (c) shows a configuration where a flat plate 4 is provided between the conveyance rollers 3 which support and convey the carbon fiber bundle F1 in the first tank 2 and the carbon fiber bundle F1 is conveyed along the surface of this flat plate 4, to make the fiber easy to be flattened.

Fig. 2 (d) shows a configuration where a flat belt 5 is wound around the conveyance rollers 3 which support and convey the carbon fiber bundle F1 in the first tank 2 and the carbon fiber bundle F1 is conveyed along the surface of this flat belt 5, to make the fiber easy to be flattened.

### Second Step

The carbon fiber (flat fiber bundle), which was flattened by being immersed into reduced water through the first tank 2, is taken out from the first tank 2 and subsequently introduced into the second tank 6 in a continuous way.

An adhesive solution containing an adhesive, alumina sol, and potassium persulfate is stored in the second tank 6, and the flat fiber bundle, which was obtained by immersing the carbon fiber bundle into reduced water, is immersed into the adhesive solution in the second tank 6.

An adhesive has a hydrophilic group, and a water-soluble starch such as a laundry starch, PVA (polyvinyl alcohol), a PTFE dispersion, a graphite nano dispersion, glycol, a water-soluble clay dispersion, a starch paste, an organic or inorganic material-containing dispersion solution having an OH-group is suitably used as an adhesive.

If concentration of the adhesive is lower than the predetermined range, the flattened carbon fiber bundle F1 may possibly return to its original fiber. In addition, if concentration of the adhesive is higher than the predetermined range, the adhesive may possibly become difficult to penetrate into the carbon fiber bundle F1.

When the adhesive is PVA, 0.5-30wt% of concentration is preferable.

Concentration of alumina sol is preferably 0.5-16.7wt%. If concentration of alumina sol is lower than the above-described lower limit, the adhesive strength of the carbon fiber resin tape may possibly decrease. In addition, the adhesive strength of the carbon fiber resin tape is less likely to increase even if concentration of alumina sol is higher than the above-described upper limit.

In addition, concentration ratio of PVA to alumina sol is preferably 3:1. Also, concentration of potassium persulfate is preferably 0.5-10wt%.

An alumina shape of alumina sol may be any of plate-like, columnar, fibrous, hexagonal plate-like shapes and so on.

Also, an alumina fiber where alumina sol is in fibrous shape is a fibrous crystal of alumina, and specifically, it includes an alumina fiber formed with an anhydrate of alumina, a hydrated alumina fiber formed with a hydrate-containing alumina, and the like.

A crystal system of the alumina fiber may include any of an amorphous, boehmite, and pseudo-boehmite crystal systems, etc. Boehmite is a crystal of the hydrated alumina denoted by a compositional formula: Al₂O₃·nH₂O. The crystal system of the alumina fiber can be adjusted according to, for example, a class of a hydrolyzable aluminum compound, its hydrolysis condition, or peptization condition, any of which will be described later. The crystal system of the alumina fiber can be identified using an X-ray diffractometer (for example, a product name "Mac. Sci. MXP-18", MAC Science Co., Ltd.).

Accordingly, when the flat fiber bundle is immersed into a solution containing an adhesive, alumina sol, and potassium persulfate, a mixed solution containing an adhesive, alumina sol, and potassium persulfate penetrates between the spread fibers.

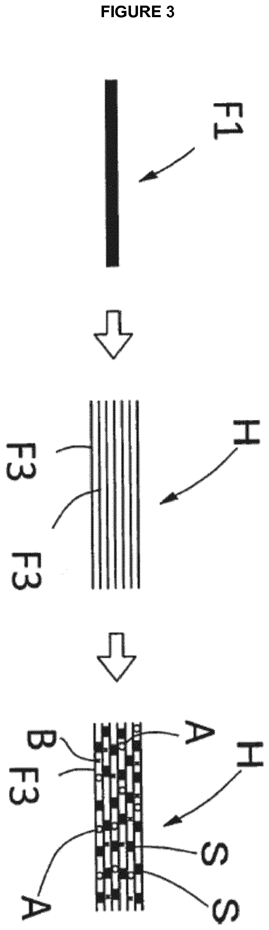

Fig. 3 schematically shows the above-described steps. The carbon fiber bundle F1 consisting of a plurality of carbon fibers is immersed into reduced water to become a flat fiber bundle H in which the carbon fiber bundle F3 is flattened. When this flat fiber bundle H is immersed into a solution containing an adhesive, alumina sol, and potassium persulfate, an adhesive S, alumina sol A, and potassium persulfate B penetrate between the carbon fibers F3.

In the present invention, the above-mentioned reduced water may be used as a solvent to dissolve an adhesive, thereby increasing penetrance of the adhesive.

Additionally, in the present invention, a method of spraying the flattened carbon fiber (flat fiber bundle) with a solution containing an adhesive without providing the second tank 6 may be applied.

### Third Step

The carbon fiber bundle F1 spread after being immersed into a solution containing an adhesive and alumina sol is taken out from the second tank 6 and then supplied to the drying apparatus 7 to be dried.

A class of the drying apparatus 7 may be, but not particularly limited to, a heater heating device, a warm air heating device, and a heating device using far-infrared rays.

However, in the method according to the present invention, it is not necessarily required to provide the drying apparatus 7 and the carbon fiber bundle may be naturally dried.

In addition, after this third step, the carbon fiber resin tape F2 may be further rinsed with water to remove excessive adhesives and dried. Excessive impurities are removed and necessary OH- is left, thereby improving peel strength.

When the carbon fiber bundle F1 is dried after immersed into a solution containing an adhesive, the adhesive, alumina sol, and potassium persulfate solidify between the spread fibers.

Accordingly, since the fiber is solidified in a flattened state with an adhesive, it does not return to its original fiber even after a long period of time and also a carbon fiber resin tape F2 having a high mechanical strength can be obtained.

After solidifying the adhesive through the drying apparatus 7, the carbon fiber resin tape F2 is wound by the winding roller 8, and thus, the production of the carbon-fiber resin tape F2 is completed.

As described above, according to the method of the present invention, the belt-like carbon fiber resin tape F2 can be produced by flattening fiber, without applying a physical outside force.

However, applying a physical outside force is not completely excluded by the invention, and the method of the present invention may be used in combination with a conventional method for applying a physical outside force.

For example, it is also possible to adopt a method for installing an ultrasonic generator in the above-described first tank 2, and for applying ultrasonic waves to the carbon fiber bundle F1 immersed in reduced water.

In this case, the sufficient opening is achieved by the opening action of the reduced water even if the output of the ultrasonic waves is weakened, thereby providing an effect that the fully spread, belt-like flat fiber bundle can be produced efficiently while securely preventing damage to the fiber.

The carbon fiber resin tape F2 produced in this way can be firmly adhered to any other object by an adhesive and laminate the plurality of the carbon-fiber resin tapes F2 with or without the adhesive to form it into a three-dimensional shape. Thus, the tape needs not to be pressed at high pressure when it is adhered or laminated, and a high adhesive strength is achieved by heating the tape at 100 °C or below when heated.

This is because the OH-group of alumina sol and potassium persulfate adhered between the carbon fibers contributes to the high adhesive strength of the carbon fiber resin tape F2.

As the adhesive, water-soluble starch like laundry starch, PVA (polyvinyl alcohol), phenol resin, PTFE dispersion, epoxy resin, graphite nano dispersion, silicon resin, glycol, water-soluble clay dispersion, starch paste, urethane based resin, butyl based resin, or other organic or inorganic material-containing dispersion solution is preferably used.

### EXAMPLE

An example of the adhesive strength of the carbon-fiber resin tape produced by the production method of the present invention is shown.

Using the carbon-fiber resin tape production device in Fig. 1, the carbon-fiber resin tape is produced by setting the oxidation-reduction potential of the reduced water in the first tank to - 850mV, preparing the liquid composition in the second tank as the composition of Table 1, and utilizing a methods including rinsing the tape after the above-described third step and a method not including rinsing the tape after the above-described third step.

**Table 1**

| | Solution in Second tank | | | Rinsing after drying | |
|---|---|---|---|---|---|
| | PVA (wt %) | Alumina sol (wt %) | potassium persulfate (wt %) | Yes/No | Rinsing Time (min) |
| Example 1 | 5 | 16.7 | 10 | No | 0 |
| Example 2 | 5 | 16.7 | 10 | Yes | 1 |
| Example 3 | 0.5 | 0.5 | 0.5 | Yes | 1 |
| Example 4 | 3 | 1 | 1 | Yes | 1 |
| Example 5 | 6 | 2 | 2 | Yes | 1 |
| Example 6 | 15 | 5 | 5 | Yes | 3 |
| Example 7 | 30 | 10 | 10 | Yes | 3 |
| Comparative Example 1 | 5 | 0 | 10 | No | 0 |
| Comparative Example 2 | 5 | 0 | 10 | Yes | 1 |
| Comparative Example 3 | 50 | 0 | 0 | No | 0 |

| | | | | | |
|---|---|---|---|---|---|
| "PVA500" was used as PVA, which is manufactured by Kishida Co., Ltd. "CSA-110AD" was used as alumina sol, which is manufactured by Kawaken Fine Chemicals Co., Ltd. | | | | | |

A warm water at 80 °C was used in rinsing after drying, and the tape was dried at 80-90 °C for 15 to 20 minutes after rinsing.

The carbon-fiber resin tape produced in this way was adhered to a SUS plate (0.05 mm in thickness) with a phenolic adhesive. In the adhesion, the carbon-fiber resin tape and the SUS plate were clamped by a C clamp, and they were held for 20 minutes at 160 °C.

After the adhesion, the peel adhesive strength of the carbon-fiber resin tape from the SUS plate was measured by the method based on JIS K6854-1 (adhesive-peel adhesive strength testing method).

As a tensile testing machine, the tensile testing machine AGX-50 type was used, which is manufactured by SHIMADZU Corporation.

The tensile speed was set to 5 mm/sec.

The size of the sample of a carbon-fiber resin tape was set to 25 mm (width) x 250 mm (length) with the thickness of 0.25 mm.

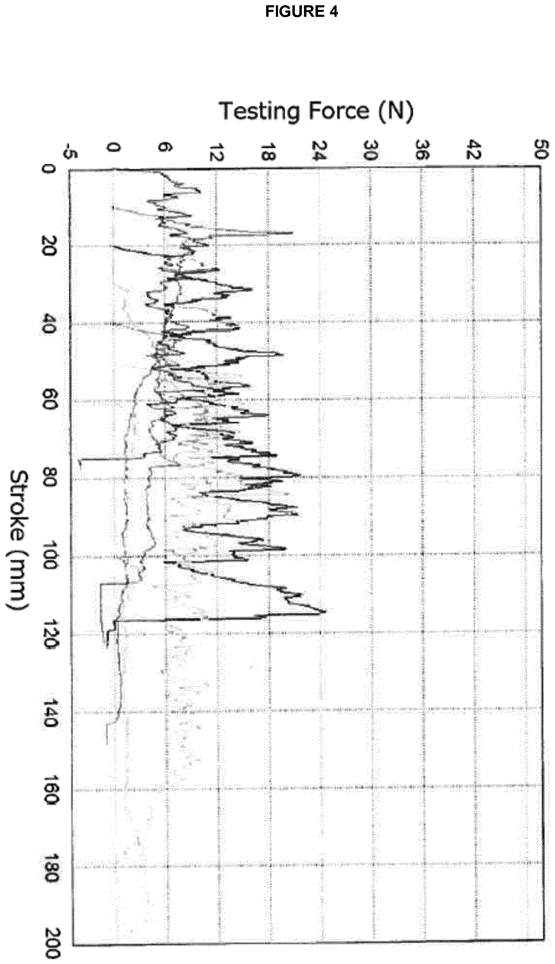

The chart of the measured peel strength is shown in Fig. 4, and the peel strength (25 mm width) is shown in Table 2.

The average strength of the peel strength was evaluated, and the maximum peak of some of the peel strength in the chart was evaluated.

**Table 2**

| Test No. | Maximum value | Average |
|---|---|---|
| Example 1 | 12.07 | 6.50 |
| Example 2 | 24.70 | 14.72 |
| Example 3 | - | 16 |
| Example 4 | - | 18 |
| Example 5 | - | 20 |
| Example 6 | - | 22 |
| Example 7 | - | 13 |
| Comparative Example 1 | 1.59 | 1.25 |
| Comparative Example 2 | 11.71 | 8.20 |
| Comparative Example 3 | 3.63 | 1.52 |

| | | |
|---|---|---|
| (Unit: N/25 mm width) | | |

As a result,
(1) The peel strength in Example 1-7 having PVA, alumina sol and potassium persulfate is higher than that in comparative example 1 and 2 having PVA and potassium persulfate without alumina sol.
(2) The peel strength in comparative example 1 and 2 having PVA and potassium persulfate without alumina sol is higher than that in comparative example 3 having 50% of PVA.
(3) The peel strength in the case of rinsing after drying (Example 2, comparative example 2) is higher than that in the case of not rinsing (Example 2, comparative example 2). This is because the excess impurities were removed and the required OH- was left.
(4) With PVA: 0.5-30 wt %, alumina sol: 0.5-16.7 wt %, and potassium persulfate: 0.5-10 wt %, in Example 2-7 with rinsing after drying, the peel strength became 13 (N/25 mm width) or higher. Especially, with PVA: 15 wt %, alumina sol: 5 wt %, and potassium persulfate: 5 wt %, in Example 6 with rinsing after drying, the peel strength reached to the maximum value of 22 (N/25 mm width).
(5) The potassium persulfate is precipitated and separated even if it is added in the larger amount than the range in Example.
(6) If the alumina sol is added in the larger amount than the range in Example, the surface becomes stiff, and thus, leading to less contribution to adhesive strength.

### Industrial availability

The carbon-fiber resin tape of the present invention may not only be used in tape shape but also sheet shape in which the tape is woven, and can be used as a three dimensional structure by laminating the tape or the sheet in which the tape is woven. If the tape is used as a three dimensional structure, it can obtain a high strength while being lightweight. Thus, if the tape is used for mobile body such as automobile or airplane, the tape can improve the fuel economy. Further, the tape also can be used for a racket, fishing goods, etc.

### Description of reference number

- F1: Carbon fiber bundle
- F2: Carbon fiber resin tape
- A: Alumina sol
- B: Potassium persulfate
- S: Adhesive

## Claims

1. A method of manufacturing a carbon fiber resin tape, the method comprising:
a first step of immersing a carbon fiber bundle having several carbon fibers in reduced water having a negative oxidation-reduction potential to flatten the carbon fiber bundle;
a second step of immersing said carbon fiber bundle in an adhesive solution containing an adhesive, alumina sol, and potassium persulfate after said first step; and
a third step of drying said carbon fiber bundle after said second step.

2. The method according to claim 1, wherein the oxidation-reduction potential of said reduced water is equal to or less than -800mV.

3. The method according to claim 1 or 2, wherein said adhesive in said adhesive solution is polyvinyl alcohol, and wherein concentration of the polyvinyl alcohol is 0.5-30wt%, concentration of the alumina sol is 0.5-16.7wt%, and concentration of the potassium persulfate is 0.5-10wt%.

4. A carbon fiber resin tape where several carbon fiber bundles are flattened, wherein the tape contains a dry adhesive including alumina sol and potassium persulfate, on the surface and in the gap between the carbon fibers.

## Patentansprüche

1. Methode zur Herstellung eines Karbonfaser-Harz-Bandes, umfassend:
einen ersten Schritt des Eintauchens eines Karbonfaserbündels mit mehreren Karbonfasern in reduziertes Wasser mit einem negativen Oxidations-Reduktionspotenzial, um das Karbonfaserbündel abzuflachen;
einen zweiten Schritt des Eintauchens des Karbonfaserbündels in eine Klebelösung nach dem ersten Schritt, die Klebstoff, Sol-Aluminiumoxid und Kaliumpersulfat enthält; und
einen dritten Schritt des Trocknens des Karbonfaserbündels nach dem zweiten Schritt.

2. Methode nach Patentanspruch 1, wobei das Oxidations-Reduktionspotenzial des reduzierten Wassers gleich oder kleiner als -800 mV ist.

3. Methode nach Patentanspruch 1 oder 2, wobei der Klebstoff in der Klebelösung Polyvinylalkohol ist, wobei die Konzentration des Polyvinylalkohols 0,5-30 Gewichts-%, die Konzentration von Sol-Aluminiumoxid 0,5-16,7 Gewichts-% und die Konzentration von Kaliumpersulfat 0,5-10 Gewichts-% beträgt.

4. Karbonfaser-Harz-Band bei dem mehrere Karbonfaserbündel abgeflacht sind, wobei das Band einen trockenen Klebstoff einschließlich Sol-Aluminiumoxid und Kaliumpersulfat auf der Oberfläche und im Spalt zwischen den Karbonfasern enthält.

## Revendications

1. Procédé de fabrication d'un ruban en résine de fibres de carbone, le procédé comprenant :
une première étape d'immersion d'un faisceau de fibres de carbone possédant plusieurs fibres de carbone dans de l'eau réduite ayant un potentiel d'oxydation-réduction négatif pour aplatir le faisceau de fibres de carbone ;
une deuxième étape d'immersion dudit faisceau de fibres de carbone dans une solution adhésive contenant un adhésif, du sol d'alumine et du persulfate de potassium après ladite première étape ; et
une troisième étape de séchage dudit faisceau de fibres de carbone après ladite deuxième étape.

2. Le procédé selon la revendication 1, dans lequel le potentiel d'oxydation-réduction de ladite eau réduite est égal ou inférieur à -800mV.

3. Le procédé selon la revendication 1 ou 2, dans lequel ledit adhésif dans ladite solution adhésive est de l'alcool polyvinylique, et dans lequel la concentration de l'alcool polyvinylique est de 0,5 à 30% en poids, la concentration du sol d'alumine est de 0,5 à 16,7% en poids, et la concentration du persulfate de potassium est de 0,5 à 10% en poids.

4. Ruban en résine de fibres de carbone où plusieurs faisceaux de fibres de carbone sont aplatis, où le ruban contient un adhésif sec comprenant du sol d'alumine et du persulfate de potassium, en surface et dans l'espace vide entre les fibres de carbone.
